# EUROPÄISCHE PATENTSCHRIFT

(11) **EP 0 477 826 B1**
(45) Veröffentlichungstag und Bekanntmachung des Hinweises auf die Patenterteilung: **18.05.1994**
(21) Anmeldenummer: 91116161.0
(22) Anmeldetag: 23.09.1991
(51) Int. Cl.: H01G 9/00

(54) **Verfahren zum Verbinden von mit einer Elektrolytflüssigkeit verunreinigten Aluminiumbändchen**
Method for attaching an aluminium strip, soiled by an electrolyte
Procédé pour le raccordement d'une bandelette en aluminium souillée par un électrolyte

(30) Priorität: 25.09.1990 DE 4030309
(43) Veröffentlichungstag der Anmeldung: 01.04.1992
(73) Patentinhaber: SIEMENS AKTIENGESELLSCHAFT, 80333 München (DE)
(72) Erfinder: Frey, Jürgen, Dipl.-Ing., W-7920 Heidenheim 8 (DE); Baumann, Udo, Dipl.-Ing. (FH), W-7920 Heidenheim (DE)

(56) Entgegenhaltungen:
- DE-A- 3 723 733
- PATENT ABSTRACTS OF JAPAN vol. 15, no. 240 (E-1079)20.Juni 1991 & JP-A-3 074 833
- PATENT ABSTRACTS OF JAPAN vol. 13, no. 166 (E-746)20.April 1989

## Beschreibung

Die Erfindung betrifft ein Verfahren zum Verbinden von mit einer Elektrolytflüssigkeit verunreinigten Aluminiumbändchen mit in einer Abschlußscheibe eines Elektrolytkondensatorgehäuses angeordneten Aluminiumdurchführungen mit Zapfen und Nietbund.

Derartige Aluminium-Elektrolytkondensatoren bestehen aus einer gegebenenfalls aufgerauhten Anodenfolie aus Aluminium, die mit der dielektrisch wirksamen Oxidschicht versehen ist. Als Kathode wirkt ein flüssiger Betriebselektrolyt, der im allgemeinen in einer gleichzeitig als Abstandshalter dienenden Papierzwischenlage gespeichert ist. Zur Kathodenzuführung wird eine gegebenenfalls aufgerauhte Aluminiumfolie verwendet. Die genannten Folien werden miteinander verwickelt und im allgemeinen vor dem Einbau in ein Gehäuse mit dem Betriebselektrolyten imprägniert. Als Stromzuführungen sind an den Anoden- bzw. Kathodenfolien Aluminiumbändchen ankontaktiert, die mit Aluminiumdurchführungen verbunden werden, die in der Abschlußscheibe angeordnet sind.

Bei dem genannten Aufbau besteht die Schwierigkeit darin, daß die durch den Imprägniervorgang verunreinigten Aluminiumbändchen sich nur unzureichend mit den Aluminiumdurchführungen verbinden lassen. Die geforderte hohe mechanische Festigkeit und sichere elektrische Kontaktierung wird nur durch erhöhten Aufwand erreicht.

Es ist zwar möglich, die Aluminiumbändchen vor der Imprägnierung an die Durchführungen anzuschweißen, jedoch bringt dies große fertigungstechnische Probleme mit sich wie z.B. beim Kontaktieren während der Formierung und Verunreinigungen der Abschlußscheibe beim Imprägnieren.

Es ist auch möglich, die Bändchen nach der Imprägnierung zu reinigen, wobei eine ausreichende Reinigung nur im Ultraschallbad möglich ist. Eine Automatisierung dieses Vorgangs ist nur mit sehr hohem Aufwand zu realisieren, so daß diese Methode (manuelle Reinigung) nur bei kleinen Stückzahlen infrage kommt.

Eine weitere Möglichkeit besteht darin, die mit Elektrolytflüssigkeit verunreinigten Aluminiumbändchen mittels Ultraschall zu verschweißen. Diese Methode ist jedoch nicht universell einsetzbar, da bei bestimmten Voraussetzungen Ultraschallschweißen nicht möglich ist (z.B. bei Lösungsmittelelektrolyt und massearmen Durchführungen wegen abschwingender Drähte).

Aufgabe der Erfindung ist es daher, ein Verfahren anzugeben, bei dem in sicherer Weise mit hoher mechanischer Festigkeit eine sichere elektrische Kontaktierung von mit einer Elektrolytflüssigkeit verunreinigten Aluminiumbändchen gewährleistet wird.

Diese Aufgabe wird erfindungsgemäß dadurch gelöst, daß das Aluminiumbändchen auf den Zapfen gelegt wird, daß mit Hilfe eines Lochwerkzeugs das Bändchen unter Verwendung des Zapfens als Schnittstempel gestanzt wird, so daß das Aluminiumbändchen am Nietkopf anliegt, daß anschließend der überstehende Zapfen mit Hilfe eines Nietwerkzeuges zu einem flachen Nietkopf geformt wird und daß der Nietkopfrand mittels einer Laserschweißung mit dem Aluminiumbändchen verbunden wird.

Es ist vorteilhaft, daß der Laserstrahl unter einem Winkel auf den Nietkopf auftrifft und daß der Winkel so gewählt wird, daß die gedachte Verlängerung des Laserstrahls durch Nietkopf und Nietschaft führt. Hierbei kann es zweckmäßig sein, den Nietkopf gegenüber dem Nietschaft exzentrisch versetzt anzuordnen.

Der Gegenstand der Erfindung wird anhand der folgenden Ausführungsbeispiele näher erläutert.

In der dazugehörenden Zeichnung zeigen
Figur 1 das Aluminiumbändchen vor dem Stanzvorgang,
Figur 2 das gestanzte Aluminiumbändchen,
Figur 3 die Verformung des Zapfens zu einem Nietkopf,
Figur 4 die Lage von Schweißpunkten am Nietkopf,
Figur 5 einen Schweißvorgang mit nicht abgewinkeltem Laserstrahl,
Figur 6 einen Schweißvorgang mit abgewinkeltem Laserstrahl und
Figur 7 einen exzentrisch angeordneten Nietkopf.

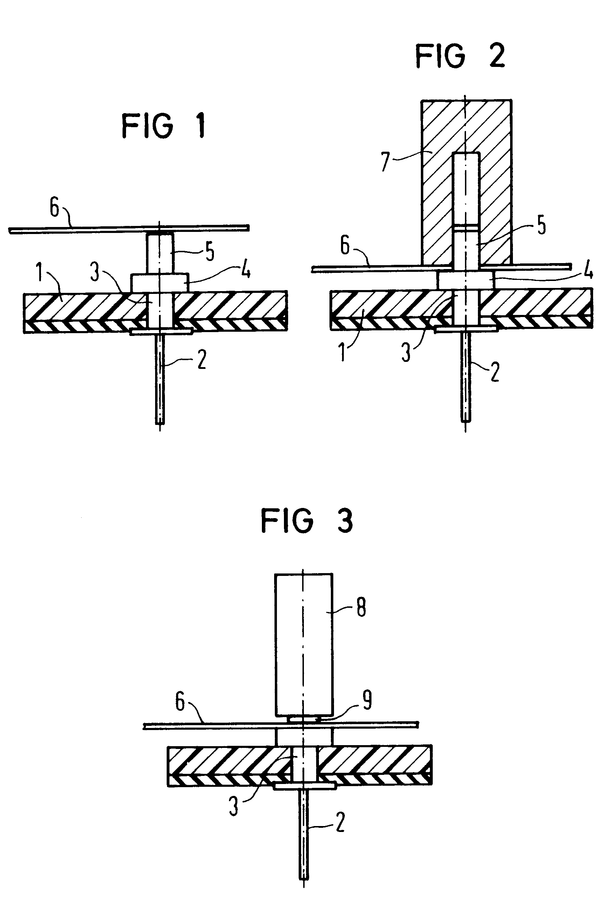

In der Figur 1 ist eine Deckscheibe 1 gezeigt, die zum Verschließen eines Gehäuses dient, in das ein Aluminiumelektrolytkondensator eingebaut werden soll. In der Deckscheibe 1 ist eine Durchführung 2 aus Aluminium angeordnet, die einen Nietschaft 3, einen Nietbund 4 und einen angestauchten Zapfen 5 besitzt. Das Aluminiumbändchen 6 wird auf den Zapfen 5 aufgelegt.

In der Figur 2 ist gezeigt, wie das Aluminiumbändchen 6 mit Hilfe eines Lochstempels 7 gestanzt wird, wobei der Zapfen 5 als Schnittstempel dient. Nach dem Stanzvorgang liegt das Bändchen 6 am Nietbund 4 der Durchführung 2 an.

Der folgende Verfahrensschritt ist in Figur 3 dargestellt. Mit Hilfe eines Nietstempels 8 wird der überstehende Zapfen 5 zu einem flachen Nietkopf 9 verformt, so daß das Bändchen 6 mit der Durchführung 2 mechanisch fest verbunden ist.

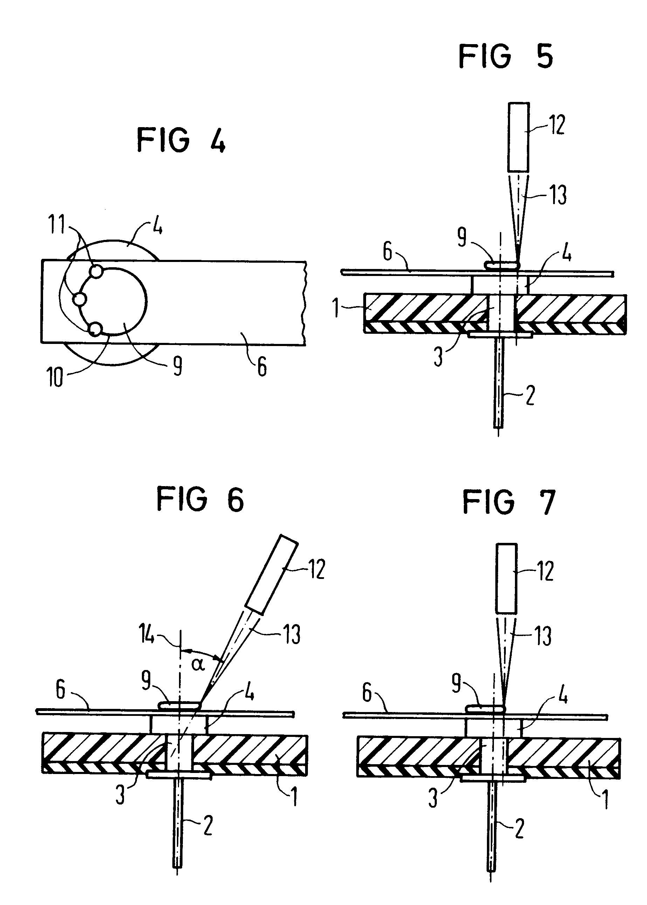

Für eine sichere elektrische Kontaktierung wird, wie es in Figur 4 dargestellt ist, der Nietkopf 9 mit dem Bändchen 6 durch eine Laserschweißung verbunden. Hierzu wird der Rand 10 des Nietkopfes 9 aufgeschmolzen, wobei die einzelnen Schweißpunkte 11 gebildet werden. Die Anzahl der Schweißpunkte 11 ist von der Größe des Nietkopfes 9 abhängig.

In der Figur 5 ist gezeigt, wie der Laserstrahl 13 eines nicht mittig über der Durchführung 2 angeordneten Lasers 12 auf den Nietkopf 9 auftrifft. In diesem Fall muß die gesamte Impulsenergie vom Nietbund 4 aufgenommen werden und kann nur langsam über den Nietschaft 3 abgeführt werden. Es besteht die Gefahr, daß es zu örtlichen Überhitzungen und Materialverdampfungen kommt, die zu Löchern bis zur Deckscheibe 1 führen können.

In der Figur 6 ist dargestellt, daß es insbesondere bei größeren Nietköpfen 9 deshalb vorteilhaft ist, wenn der Laser 12 unter einem Winkel α zur Mittelachse 14 der Durchführung 2 angeordnet wird, so daß der Laserstrahl 13 schräg auf den Nietkopf 9 auftrifft. Der Winkel α soll dabei so gewählt werden, daß der Aufschmelzbereich in Richtung Nietschaft 3 verläuft, wodurch die Impulsenergie über diesen schnell abgegeben werden kann.

Eine weitere Möglichkeit ist in Figur 7 dargestellt und besteht darin, den Zapfen und damit den Nietkopf 9 exzentrisch zum Nietschaft 3 anzuordnen. Bei dieser Anordnung liegt der Rand des Nietkopfes 9 über dem Nietschaft 3, so daß auch hierbei die entstehende Wärme schnell über den Nietschaft 3 abgeführt werden kann.

## Patentansprüche

1. Verfahren zum Verbinden von mit einer Elektrolytflüssigkeit verunreinigten Aluminiumbändchen (6) mit in einer Abschlußscheibe (1) eines Elektrolytkondensatorgehäuses angeordneten Aluminiumdurchführungen mit Zapfen (5) und Nietbund (4), **dadurch** **gekennzeichnet,** daß das Aluminiumbändchen (6) auf den Zapfen (5) gelegt wird, daß mit Hilfe eines Lochwerkzeugs (7) das Bändchen (6) unter Verwendung des Zapfens (5) als Schnittstempel gestanzt wird, so daß das Aluminiumbändchen (6) am Nietbund (4) anliegt, daß anschließend der überstehende Zapfen (5) mit Hilfe eines Nietwerkzeugs (8) zu einem flachen Nietkopf (9) geformt wird und daß der Nietkopfrand (10) mittels einer Laserschweißung mit dem Aluminiumbändchen (6) verbunden wird.

2. Verfahren nach Anspruch 1, **dadurch gekennzeichnet,** daß der Laserstrahl (13) unter einem Winkel α auf den Nietkopf (9) auftrifft und daß der Winkel α so gewählt wird, daß die gedachte Verlängerung des Laserstrahls (13) durch Nietkopf (9) und Nietschaft (4) führt.

3. Verfahren nach Anspruch 1 oder 2, **dadurch gekkennzeichnet,** daß der Nietkopf (9) gegenüber dem Nietschaft (3) exzentrisch versetzt angeordnet wird.

## Claims

1. Method of joining small aluminium strips (6) contaminated with an electrolyte liquid to aluminium leadthroughs which are disposed in a closure disc (1) of an electrolytic capacitor housing and have a stud (5) and a rivet collar (4), characterized in that the small aluminium strip (6) is placed on the stud (5), in that the small strip (6) is punched with the aid of a punching die (7) using the stud (5) as blanking punch so that the small aluminium strip (6) rests against the rivet collar (4), in that the projecting stud (5) is then shaped to form a flat rivet head (9) with the aid of a riveting tool (8), and in that the rivet-head rim (10) is joined to the small aluminium strip (6) by means of laser welding.

2. Method according to Claim 1, characterized in that the laser beam (13) strikes the rivet head (9) at an angle α and in that the angle a is chosen in such a way that the imaginary extension of the laser beam (13) passes through the rivet head (9) and the rivet shank (3).

3. Method according to Claim 1 or 2, characterized in that the rivet head (9) is disposed in an eccentrically offset manner with respect to the rivet shank (3).

## Revendications

1. Procédé pour relier une bandelette (6) d'aluminium, souillée par un liquide servant d'électrolyte, à des traversées en aluminium, ménagées dans un disque (1) de fermeture d'un boîtier de condensateur à électrolyte et munies d'un tenon (5) et d'un collet (4) de rivetage, caractérisé en ce qu'il consiste à appliquer la bandelette (6) d'aluminium sur le tenon (5), à découper, à l'aide d'un outil (7) de perforation, la bandelette (6) en utilisant le tenon (5) comme poinçon de coupe, de manière que la bandelette (6) en aluminium s'applique au collet (4) de rivetage, à transformer ensuite le tenon (5) en saillie, à l'aide d'un outil (8) de rivetage, en une tête (9) plate de rivet et à relier le bord (10) de la tête de rivet à la bande (6) d'aluminium au moyen d'une soudure laser.

2. Procédé suivant la revendication 1, caractérisé en ce que le faisceau (13) laser arrive sur la tête (9) de rivet sous un angle α et en ce qu'il consiste à choisir l'angle α de manière que le prolongement imaginaire du faisceau (13) laser passe à travers la tête (9) du rivet et le fût (4) du rivet.

3. Procédé suivant la revendication 1 ou 2, caractérisé en ce qu'il consiste à excentrer la tête (9) du rivet par rapport au fût (3) du rivet.
